# FASCICULE DE BREVET EUROPEEN

(11) **EP 3 770 472 B1**
(45) Date de publication et mention de la délivrance du brevet: **25.05.2022**
(21) Numéro de dépôt: 20187918.6
(22) Date de dépôt: 27.07.2020
(51) Int. Cl.: F16K 27/02, F16K 1/226, F16K 1/22, F16K 1/20

(54) **VANNE PAPILLON PERFECTIONNÉE POUR LE TRANSPORT DE FLUIDE SOUS HAUTE PRESSION OU SOUS EXTRÊME PRESSION**
PERFEKTIONIERTES DROSSELVENTIL FÜR DEN TRANSPORT VON FLUIDEN UNTER HOHEM ODER EXTREMEM DRUCK
IMPROVED THROTTLE VALVE FOR TRANSPORTING FLUID UNDER HIGH PRESSURE OR UNDER EXTREME PRESSURE

(30) Priorité: 26.07.2019 FR 1908523
(43) Date de publication de la demande: 27.01.2021
(73) Titulaire: Buracco SAS, 71300 Montceau les Mines (FR)
(72) Inventeur: LE MONE DE MARGON, Damien, 71300 MONCEAU LES MINES (FR); ALVES, Jordan, 71130 GUEUGNON (FR)
(74) Mandataire: Germain Maureau

(56) Documents cités:
- WO-A1-2010/085096
- CN-U- 205 136 730
- CN-U- 205 806 516
- US-A1- 2005 184 267
- US-A1- 2009 039 305
- US-A1- 2013 206 238
- US-B1- 6 213 141
- US-B1- 6 494 434

## Description

### Domaine technique

La présente invention concerne une vanne papillon destinée à être utilisée dans une tuyauterie de transport de fluide sous haute pression dite HP ou sous extrême pression dite EP.

### Etat de la technique

Dans le domaine de la régulation d'un fluide sous haute pression ou sous extrême pression dans une conduite, il est bien connu d'utiliser une vanne papillon actionnée par un organe de manœuvre tel qu'un réducteur à roue et vis sans fin par exemple. Une telle vanne papillon est usuellement un corps de vanne de forme cylindrique, obtenu par fonderie, muni d'un évidement central cylindrique dans lequel s'étend une plaque d'obturateur sensiblement circulaire, ladite plaque d'obturateur étant montée pivotante autour d'un axe s'étendant verticalement et parallèlement à un diamètre du corps de vanne, ledit axe faisant saillie à l'extrémité supérieure dudit corps de vanne pour former un axe dite de manœuvre, la partie supérieure du corps de vanne comprenant un col qui est obtenu d'un seul tenant avec le corps de vanne.

De telles vannes papillon sont décrites dans les documents FR1573478, FR2543646 et FR2429945 notamment.

Le document FR1573478 décrit une vanne papillon qui est destinée à être utilisée dans une tuyauterie de transport de fluide sous haute pression et comprends un corps creux cylindrique pourvu à sa partie supérieure d'un col dirigé vers le haut et comportant un alésage communiquant avec l'intérieur creux de ce corps sur le fond duquel est ménagé intérieurement une cavité dans l'alignement de l'alésage du col, un arbre inférieur mené tournant dans cette cavité et faisant partiellement saillie vers le haut, un arbre supérieur menant tournant dans l'alésage du col et faisant partiellement saillie à l'intérieur du corps, et un bloc rotatif de disques monté dans ledit corps transversalement à ce dernier. Ledit bloc rotatif comporte une paire de disques identiques fixés l'un à l'autre, face à face, et enserrant une garniture annulaire en matière élastomère faisant partiellement et radialement saillie par rapport au bord périphérique extérieur desdits disques.

Ce type de vanne papillon présente l'inconvénient de présenter une hauteur importante de l'axe autour duquel pivote l'obturateur qui procure un déplacement angulaire de l'axe dans le presse-étoupe conduisant à une perte d'étanchéité de la garniture et la dégradation des composants par le frottement de l'axe sur le fouloir. Par ailleurs, le col de ce type de vanne procure des phénomènes de conduction thermique à l'extérieur et sur l'actionneur.

Le document FR2543646 décrit un robinet de type vanne papillon destiné à interrompre la circulation d'un fluide dans une conduite. Ledit robinet se compose d'un corps dit carcasse générale métallique, de forme circulaire aplatie, évidée en sa partie centrale, dotée d'un canal central traversant dans le sens longitudinal, présentant à sa partie supérieure un prolongement rétréci, ou col, qui dans sa partie interne est évidé et qui, du côté extérieur, est aplati en une tête ou bride, doté d'un axe central qui émerge à l'extérieur, du côté de son extrémité supérieure, et qui comporte une partie centrale de plus faible diamètre, et qui est dotée d'un papillon logé dans l'évidement central.

De manière similaire, ce type de vanne présente l'inconvénient de présenter une hauteur importante de l'axe autour duquel pivote l'obturateur conduisant à une perte d'étanchéité de la garniture et la dégradation des composants par le frottement de l'axe sur le fouloir en raison du déplacement angulaire de l'axe dans le presse-étoupe. Par ailleurs, le col de ce type de vanne procure des phénomènes de conduction thermique à l'extérieur et sur l'actionneur.

Le document FR2429945 décrit une vanne papillon destinée à l'utilisation avec des tuyaux d'eau enfouis dans le sol. Ladite vanne papillon comprend un boitier de vanne cylindrique muni à son extrémité supérieure d'un col, en résine synthétique, pourvu de nervures de renforcement axiales formées sur sa surface circonférentielle extérieure, une plaque d'obturateur en résine synthétique adaptée pour s'engager dans un siège d'obturateur sur le boîtier, une tige de manœuvre reliée à la plaque et montée pour tourner sur le boîtier, son extrémité saillant hors du boitier, des pièces d'embouchure cylindriques creuses en résine synthétique aboutées sur chaque extrémité ouverte du boîtier de manière à maintenir le boîtier entre elles et pourvues de brides sur leurs surfaces circonférentielles extérieures, des moyens de blocage étant prévus pour ces brides en direction axiale.

Outre le fait que la conception à partir de résine synthétique rend ce type de vanne papillon impropre à une utilisation pour des fluides sous haute pression ou sous extrême pression, ce type de vanne papillon présente également l'inconvénient de présenter une hauteur importante de l'axe autour duquel pivote l'obturateur conduisant à une perte d'étanchéité de la garniture et la dégradation des composants par le frottement de l'axe sur le fouloir en raison du déplacement angulaire de l'axe dans le presse-étoupe. Par ailleurs, le col de ce type de vanne procure des phénomènes de conduction thermique à l'extérieur et sur l'actionneur.

On connait également CN205806516, US2005/184267, US2013/206238, US2009/039305, CN205136730 et US6494434.

US 6,213,141 B1 divulgue une vanne papillon selon le préambule de la revendication 1.

Tous ces documents décrivent une vanne papillon comprenant un corps de vanne de forme cylindrique muni d'un évidement central cylindrique dans lequel s'étend une plaque d'obturateur sensiblement circulaire, ladite plaque d'obturateur étant montée pivotante autour d'un axe s'étendant verticalement et parallèlement à un diamètre du corps de vanne, ledit axe faisant saillie à l'extrémité supérieure dudit corps de vanne pour former un axe dit de manœuvre. Un presse-étoupe s'étend depuis l'extrémité supérieure du corps de vanne.

De la même manière que précédemment, ce type de vanne papillon présente l'inconvénient de présenter une hauteur importante de l'axe autour duquel pivote l'obturateur qui procure un déplacement angulaire de l'axe dans le presse-étoupe conduisant à une perte d'étanchéité de la garniture et la dégradation des composants par le frottement de l'axe sur le fouloir. Par ailleurs, le col de ce type de vanne procure des phénomènes de conduction thermique à l'extérieur et sur l'actionneur.

### Divulgation de l'invention

L'un des buts de l'invention est donc de remédier à ces inconvénients en proposant une vanne papillon de conception simple et peu onéreuse, robuste, présentant un plus faible encombrement et plus grande précision lorsque la régulation est réalisée par positionnement angulaire, procurant une bonne étanchéité au cours du temps et limitant les phénomènes de conduction thermique.

A cet effet, et conformément à l'invention, il est proposé une vanne papillon, destinée à être utilisée dans une tuyauterie de transport de fluide sous haute pression dite HP ou sous extrême pression dite EP, comprenant au moins un corps de vanne de forme cylindrique muni d'un évidement central cylindrique dans lequel s'étend une plaque d'obturateur sensiblement circulaire, ladite plaque d'obturateur étant montée pivotante autour d'un axe s'étendant verticalement et parallèlement à un diamètre du corps de vanne, ledit axe faisant saillie à l'extrémité supérieure dudit corps de vanne pour former un axe dite de manœuvre ; ladite vanne papillon étant remarquable en ce que l'extrémité supérieure du corps de vanne comprend un méplat s'étendant perpendiculairement à l'axe et sur lequel est solidarisé une pièce métallique en forme de cadre sensiblement parallélépipédique, ladite pièce formant un col de la vanne, comprenant une branche inférieure solidaire du méplat et munie d'un passage pour l'axe de manœuvre, une branche supérieure formant une bride de fixation pour un organe de manœuvre et munie d'une lumière d'où fait saillie ledit axe de manœuvre, et deux branches latérales reliant les branches inférieure et supérieure.

On comprend bien que la construction de la vanne papillon suivant l'invention permet de réduire la hauteur de l'axe autour duquel pivote l'obturateur ce qui permet de limiter le déplacement angulaire de l'axe dans le presse-étoupe, évitant ainsi une perte d'étanchéité de la garniture et la dégradation des composants par le frottement de l'axe sur le fouloir. Par ailleurs, la réduction de la longueur de l'axe et du pivot permet de réduire les couples générés par les frottements non maîtrisés et permet l'introduction d'un palier au niveau du fouloir. De plus, la réduction de la longueur de l'axe permet également de réduire le décalage angulaire entre l'actionneur et l'obturateur, augmentant ainsi la précision de la vanne et la suppression du col de fonderie permet de limiter les phénomènes de conduction thermique à l'extérieur et sur l'actionneur.

De préférence, la branche inférieure du col présente une largeur inférieure à la largeur de la branche supérieure, les branches latérales présentant une forme trapézoïdale.

Par ailleurs, la branche supérieure comprend des trous positionnés à la périphérie de la lumière pour recevoir des moyens de fixation de l'organe de manœuvre de la vanne.

Ledit col est obtenue d'un seul tenant et présente une forme générale de U dont les extrémités libres sont repliées vers la partie centrale pour former la branche inférieure du col.

Selon un premier mode de réalisation, ladite vanne comprend un siège d'obturateur annulaire emboité dans la paroi circonférentielle intérieure du corps de vanne, de part et d'autre dudit obturateur.

Chaque siège d'obturateur a ses bords recourbés vers l'extérieur et emboités dans chaque extrémité ouverte correspondante du corps de vanne.

Ledit axe comprend deux parties, une partie dite supérieure formant l'axe de manœuvre et traversant le col ainsi que la partie supérieure du corps de vanne, ledit axe étant solidaire de l'extrémité supérieure de l'obturateur s'étendant dans le corps de vanne, et une partie dite inférieure s'étendant de la partie inférieure du corps de vanne et étant solidaire de l'extrémité inférieure dudit obturateur.

De plus, la partie inférieure du corps de vanne comprend un pallier à travers lequel passe la partie inférieure de l'axe et un presse-étoupe serré par un fouloir.

Selon un second mode de réalisation, le corps de vanne comprend un conduit cylindrique recevant un joint annulaire métallique qui forme un siège pour l'obturateur, ledit joint annulaire métallique étant intercalé, selon l'axe de révolution interne du corps de vanne, entre une paroi du corps de vanne et une bague serre-siège maintenue par un jonc de retenue annulaire logé dans une gorge radiale intérieure du conduit.

Par ailleurs, ledit obturateur présente une forme de disque solidarisé de manière excentré à l'axe, l'axe de pivotement de l'obturateur n'étant pas confondu avec le plan dudit obturateur.

### Brève description des dessins

D'autres avantages et caractéristiques ressortiront mieux de la description qui va suivre de plusieurs variantes d'exécution, données à titre d'exemples non limitatifs, de la pince de levage pour fers à béton conforme à l'invention, en référence aux dessins annexés sur lesquels :
[Fig. 1] la figure 1 est une vue en perspective d'une vanne papillon suivant l'invention,
[Fig. 2] la figure 2 est une vue de face de la vanne papillon suivant l'invention représentée sur la figure 1,
[Fig. 3] la figure 3 est une vue en coupe transversale de la vanne papillon suivant l'invention,
[Fig. 4] la figure 4 est une vue de dessus de la vanne papillon suivant l'invention,
[Fig. 5] la figure 5 est une vue en perspective d'une variante d'exécution de la vanne papillon suivant l'invention,
[Fig. 6] la figure 6 est une vue de face de la variante d'exécution de la vanne papillon suivant l'invention,
[Fig. 7] la figure 7 est une vue en coupe transversale de la variante d'exécution de la vanne papillon suivant l'invention,
[Fig. 8] la figure 8 est une vue de dessus de la variante d'exécution de la vanne papillon suivant l'invention.

### Mode de réalisation de l'invention

Dans la suite de la description du suivant l'invention, les mêmes références numériques désignent les mêmes éléments. Les différentes vues ne sont pas nécessairement tracées à l'échelle. Par ailleurs, la vanne papillon suivant l'invention est particulèrement destinée à être utilisée dans une tuyauterie de transport de fluide sous haute pression dite HP ou sous extrême pression dite EP ; toutefois, il est bien évident qu'elle pourra trouver de nombreuses autres applications sans pour autant sortir du cadre de l'invention.

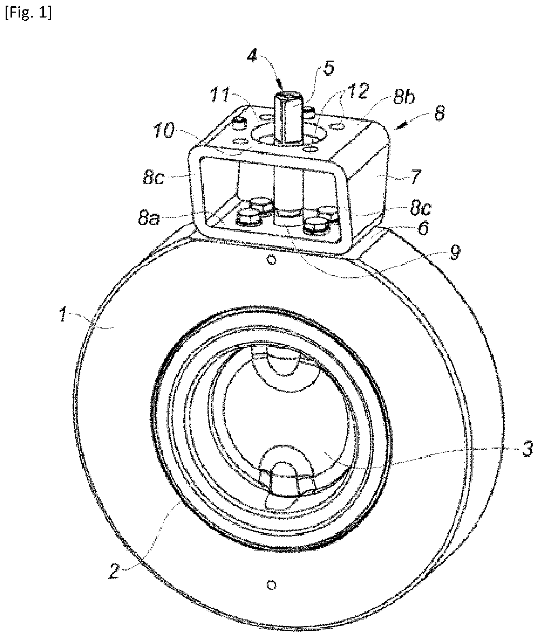

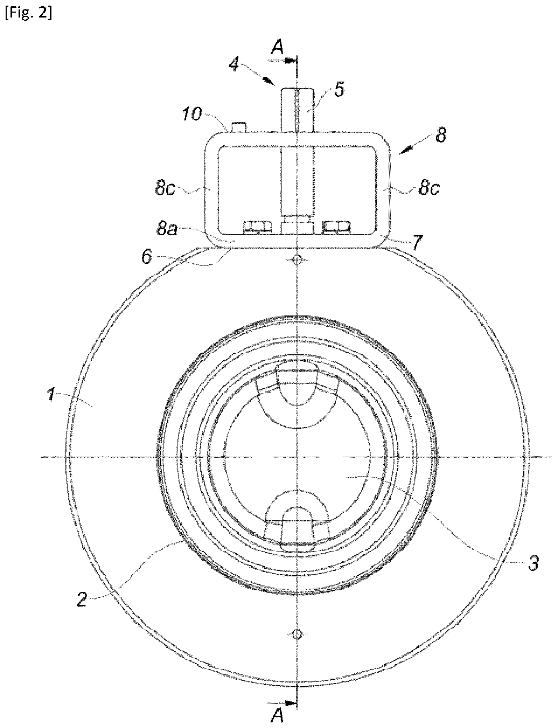

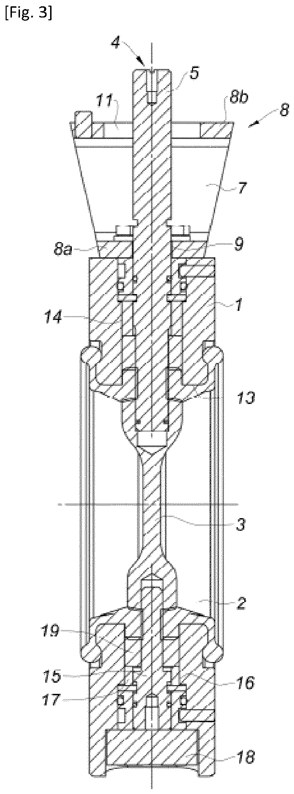

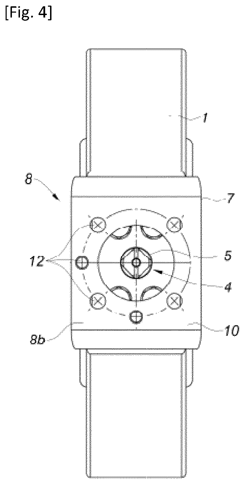

En référence aux figures 1 à 4, la vanne papillon suivant l'invention comprend, de manière connue en soi, un corps de vanne 1 de forme cylindrique muni d'un évidement central cylindrique 2 dans lequel s'étend une plaque d'obturateur 3 sensiblement circulaire, ladite plaque d'obturateur 3 étant montée pivotante autour d'un axe 4 s'étendant verticalement et parallèlement à un diamètre du corps de vanne 1, ledit axe 4 faisant saillie à l'extrémité supérieure dudit corps de vanne pour former un axe dite de manœuvre 5.

L'extrémité supérieure du corps de vanne 1 comprend avantageusement un méplat 6 s'étendant perpendiculairement à l'axe 4 et sur lequel est solidarisé une pièce métallique 7 en forme de cadre sensiblement parallélépipédique, ladite pièce formant un col 8 de la vanne. Ledit col 8 comprend une branche inférieure 8a solidaire du méplat 6 et munie d'un passage 9 pour l'axe de manœuvre 5, une branche supérieure 8b formant une bride de fixation 10 pour un organe de manœuvre, non représenté sur les figures, et munie d'une lumière 11 d'où fait saillie ledit axe de manœuvre 5, et deux branches latérales 8c reliant les branches inférieure 8a et supérieure 8b.

Dans cet exemple particulier de réalisation, compte tenu de la largeur du corps de vanne 1, la branche inférieure 8a du col 8 présente une largeur inférieure à la largeur de la branche supérieure 8b, les branches latérales 8c présentant une forme trapézoïdale.

Par ailleurs, la branche supérieure 8b comprend des trous 12 positionnés à la périphérie de la lumière 11, à travers laquelle passe l'axe de manoeuvre 5, pour recevoir des moyens de fixation de l'organe de manœuvre de la vanne, l'organe de manœuvre n'étant pas représenté sur les figures. On observera que l'organe de manœuvre pourra consister dans un organe de manœuvre manuel ou motorisé, avec un réducteur à roue et vis sans fin par exemple, pour permettre à l'utilisateur de faire pivoter celui-ci pour amener la plaque d'obturateur 3 dans une position souhaitée d'ouverture totale, de fermeture totale ou une position intermédiaire sans sortir du cadre de l'invention.

De plus, ladite vanne comprend un siège d'obturateur annulaire 13 emboité dans la paroi circonférentielle intérieure du corps de vanne 1, de part et d'autre dudit obturateur 13. Chaque siège d'obturateur 13 a ses bords recourbés vers l'extérieur et emboités dans chaque extrémité ouverte correspondante du corps de vanne 1. Ledit axe 4 comprend deux parties, une partie dite supérieure formant l'axe de manœuvre 5 et traversant le col 8 ainsi que la partie supérieure du corps de vanne 1 à travers un alésage radial 14, ledit axe 4 étant solidaire de l'extrémité supérieure de la plaque d'obturateur 3 s'étendant dans le corps de vanne 1, et une partie dite inférieure 15 s'étendant depuis la partie inférieure du corps de vanne 1 et étant solidaire de l'extrémité inférieure de ladite plaque d'obturateur, la partie inférieure du corps de vanne 1 comprenant un second alésage 16 coaxial au premier alésage. De plus, la partie inférieure du corps de vanne comprend un pallier, positionné dans le second alésage 16, à travers lequel passe la partie inférieure 15 de l'axe 4 et un presse-étoupe 17 serré par un fouloir 18.

On observera que la construction de la vanne papillon suivant l'invention permet de réduire la hauteur de l'axe 4 autour duquel pivote la plaque d'obturateur 3 ce qui permet de limiter le déplacement angulaire de l'axe 15 dans le presse-étoupe 17, évitant ainsi une perte d'étanchéité de la garniture de la plaque d'obturateur 3 et la dégradation des composants par le frottement de l'axe sur le fouloir 18. Par ailleurs, la réduction de la longueur de l'axe 4 et du pivot permet de réduire les couples générés par les frottements non maitrisés, en raison de la flexion des pièces, et permet l'introduction d'un palier 19 de maintien au niveau du fouloir 18. De plus, la réduction de la longueur de l'axe 4 permet également de réduire le décalage angulaire entre l'organe de manœuvre et la plaque d'obturateur 3, augmentant ainsi la précision de la vanne. Enfin, la suppression du col de fonderie permet de limiter les phénomènes de conduction thermique à l'extérieur et sur l'organe de manœuvre. Accessoirement, la réduction des formes de la fonderie au niveau du col et du passage de pivot libère de la place autour de la vanne pour limiter son encombrement et faciliter son intégration sur les canalisations d'un site. Par ailleurs, la forme cylindrique du corps de vanne, et l'absence de col de fonderie, procure une meilleure tenue mécanique aux chocs et aux contraintes qu'une forme de vanne de l'art antérieur qui présente une faiblesse au niveau du col et la forme cylindrique du corps de vanne présente également moins de zones de rétention de liquide limitant les risques de corrosion de la vanne.

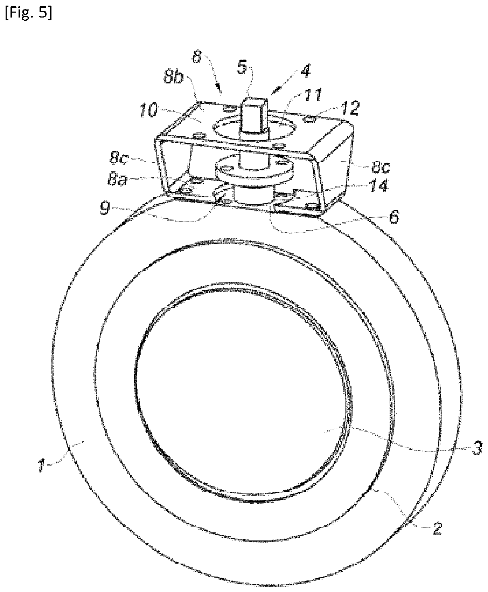

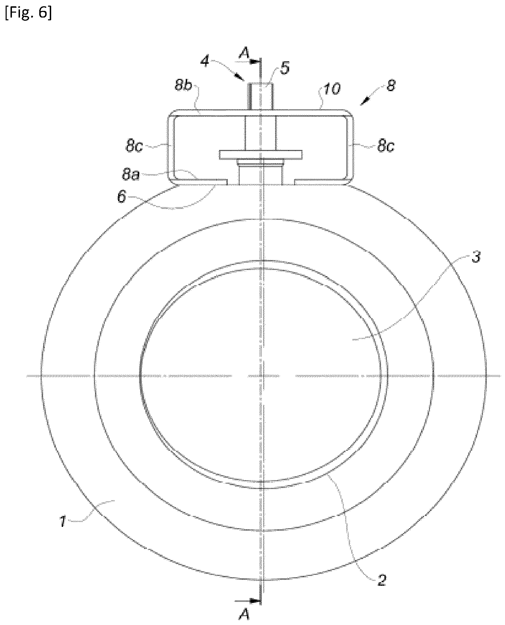

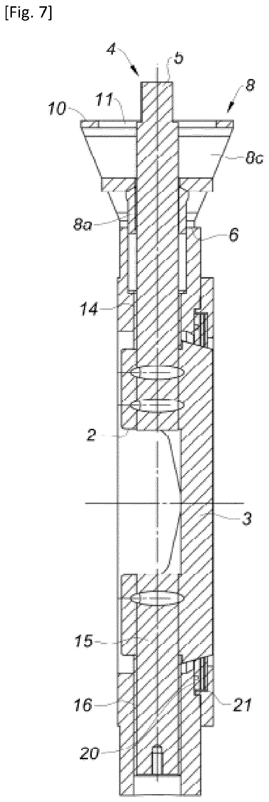

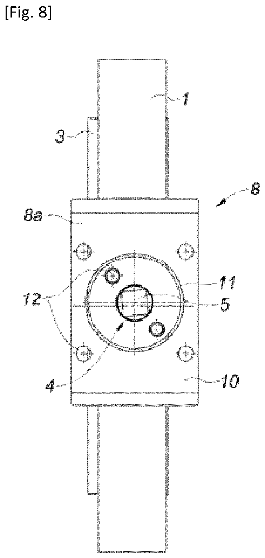

Selon une variante d'exécution de la vanne papillon suivant l'invention, en référence aux figures 5 à 8, ladite vanne papillon comprend, de la même manière que précédemment, et de manière connue en soi, un corps de vanne 1 de forme cylindrique muni d'un évidement central cylindrique 2 dans lequel s'étend une plaque d'obturateur 3 sensiblement circulaire, ladite plaque d'obturateur 3 étant montée pivotante autour d'un axe 4 s'étendant verticalement et parallèlement à un diamètre du corps de vanne 1, ledit axe 4 faisant saillie à l'extrémité supérieure dudit corps de vanne pour former un axe dite de manœuvre 5.

L'extrémité supérieure du corps de vanne 1 comprend également un méplat 6 s'étendant perpendiculairement à l'axe 4 et sur lequel est solidarisé une pièce métallique 7 en forme de cadre sensiblement parallélépipédique, ladite pièce formant un col 8 de la vanne. Ledit col 8 comprend une branche inférieure 8a solidaire du méplat 6 et munie d'un passage 9 pour l'axe de manœuvre 5, une branche supérieure 8b formant une bride de fixation 10 pour un organe de manœuvre, non représenté sur les figures, et munie d'une lumière 11 d'où fait saillie ledit axe de manœuvre 5, et deux branches latérales 8c reliant les branches inférieure 8a et supérieure 8b.

Dans cet exemple particulier de réalisation, compte tenu de la largeur du corps de vanne 1, la branche inférieure 8a du col 8 présente une largeur inférieure à la largeur de la branche supérieure 8b, les branches latérales 8c présentant une forme trapézoïdale.

Par ailleurs, la branche supérieure 8b comprend des trous 12 positionnés à la périphérie de la lumière 11, à travers laquelle passe l'axe de manoeuvre 5, pour recevoir des moyens de fixation de l'organe de manœuvre de la vanne.

Ledit col 8 se distingue de celui de la vanne précédemment décrite par le fait que ledit col 8 est obtenue d'un seul tenant et présente une forme générale de U dont les extrémités libres sont repliées vers la partie centrale pour former la branche inférieure 8a du col. Ainsi, le passage 9 pour le passage de l'axe de manœuvre 5 est constitué par l'espace séparant les extrémités libres des branches repliées du U.

Par ailleurs, dans cet exemple de réalisation, le corps de vanne comprend un conduit cylindrique recevant un joint annulaire métallique 20 qui forme un siège pour la plaque d'obturateur 3, ledit joint annulaire métallique 20 étant intercalé, selon l'axe de révolution interne du corps de vanne 1, entre une paroi du corps de vanne 1 et une bague serre-siège 21 maintenue par un jonc de retenue annulaire logé dans une gorge radiale intérieure du conduit.

Par ailleurs, ladite plaque d'obturateur 3 présente une forme de disque solidarisé de manière excentré à l'axe 4, l'axe de pivotement de la plaque d'obturateur 3 n'étant pas confondu avec le plan de ladite plaque d'obturateur 3.

Enfin, il est bien évident que les exemples que l'on vient de donner ne sont que des illustrations particulières en aucun cas limitatives quant aux domaines d'application de l'invention.

## Revendications

1. Vanne papillon, destinée à être utilisée dans une tuyauterie de transport de fluide sous haute pression dite HP ou sous extrême pression dite EP, comprenant au moins un corps de vanne (1) de forme cylindrique muni d'un évidement central cylindrique (2) dans lequel s'étend une plaque d'obturateur (3) sensiblement circulaire, ladite plaque d'obturateur (3) étant montée pivotante autour d'un axe (4) s'étendant verticalement et parallèlement à un diamètre du corps de vanne (1), ledit axe (4) faisant saillie à l'extrémité supérieure dudit corps de vanne (1) pour former un axe dit de manœuvre (5), ladite vanne papillon comprenant en outre une pièce (7) métallique en forme de cadre, ladite pièce (7) formant un col (8) de la vanne, comprenant une branche inférieure (8a) munie d'un passage (9) pour l'axe de manœuvre (5), une branche supérieure (8b) formant une bride de fixation (10) pour un organe de manœuvre et munie d'une lumière (11) d'où fait saillie ledit axe de manœuvre (5), et deux branches latérales (8c) reliant les branches inférieure (8a) et supérieure (8b), l'extrémité supérieure du corps de vanne (1) comprenant un méplat (6) s'étendant perpendiculairement à l'axe (4), ladite vanne papillon étant **caractérisée en ce que** ladite pièce métallique est en forme de cadre sensiblement parallélépipédique et **en ce que** la branche inférieure (8a) de ladite pièce (7) en forme de cadre est solidarisée sur ledit méplat.

2. Vanne papillon suivant la revendication 1 **caractérisée en ce que** la branche inférieure (8a) du col (8) présente une largeur inférieure à la largeur de la branche supérieure (8b), les branches latérales (8c) présentant une forme trapézoïdale.

3. Vanne papillon suivant l'une quelconque des revendications 1 ou 2 **caractérisée en ce que** la branche supérieure (8b) comprend des trous (12) positionnés à la périphérie de la lumière (11) pour recevoir des moyens de fixation de l'organe de manœuvre de la vanne.

4. Vanne papillon suivant l'une quelconque des revendications 1 à 3 **caractérisée en ce que** le col (8) est obtenue d'un seul tenant et présente une forme générale de U dont les extrémités libres sont repliées vers la partie centrale pour former la branche inférieure (8a) du col (8).

5. Vanne papillon suivant l'une quelconque des revendications 1 à 4 **caractérisée en ce qu'**elle comprend un siège d'obturateur annulaire (13) emboité dans la paroi circonférentielle intérieure du corps de vanne (1), de part et d'autre de ladite plaque d'obturateur (3).

6. Vanne papillon suivant la revendication 5 **caractérisée en ce que** chaque siège d'obturateur (13) a ses bords recourbés vers l'extérieur et emboités dans chaque extrémité ouverte correspondante du corps de vanne (1).

7. Vanne papillon suivant l'une quelconque des revendications 5 ou 6 **caractérisée en ce que** l'axe (4) comprend deux parties, une partie dite supérieure formant l'axe de manœuvre (5) et traversant le col (8) ainsi que la partie supérieure du corps de vanne (1), ledit axe (4) étant solidaire de l'extrémité supérieure de la plaque d'obturateur (3) s'étendant dans le corps de vanne (1), et une partie dite inférieure (15) s'étendant depuis la partie inférieure du corps de vanne (1) et étant solidaire de l'extrémité inférieure de ladite plaque d'obturateur (3).

8. Vanne papillon suivant la revendication 7 **caractérisée en ce que** la partie inférieure du corps de vanne (1) comprend un pallier (19) à travers lequel passe la partie inférieure de l'axe (15) et un presse-étoupe (17) serré par un fouloir (18).

9. Vanne papillon suivant l'une quelconque des revendications 1 à 4 **caractérisée en ce que** le corps de vanne (1) comprend un conduit cylindrique recevant un joint annulaire métallique (20) qui forme un siège pour la plaque d'obturateur (3), ledit joint annulaire métallique (20) étant intercalé, selon l'axe de révolution interne du corps de vanne (1), entre une paroi du corps de vanne (1) et une bague serre-siège (21) maintenue par un jonc de retenue annulaire logé dans une gorge radiale intérieure du conduit.

10. Vanne papillon suivant la revendication 9 **caractérisée en ce que** la plaque d'obturateur (3) présente une forme de disque solidarisé de manière excentré à l'axe (4), l'axe (4) de pivotement de la plaque d'obturateur (3) n'étant pas confondu avec le plan de ladite plaque d'obturateur (3).

## Patentansprüche

1. Drosselventil, welches dazu bestimmt ist, in einer Rohrleitung für den Transport von Fluiden unter hohem Druck, genannt HP, oder unter extremem Druck, genannt EP, verwendet zu werden, umfassend wenigstens einen Ventilkörper (1) zylindrischer Form, der mit einer zylindrischen Mittelaussparung (2) versehen ist, in der sich eine im Wesentlichen runde Verschlussplatte (3) erstreckt, wobei die Verschlussplatte (3) schwenkend um eine Achse (4), die sich vertikal und parallel zu einem Durchmesser des Ventilkörpers (1) erstreckt, montiert ist, wobei die Achse (4) an dem oberen Ende des Ventilkörpers (1) vorspringt, um eine so genannte Betätigungsachse (5) zu bilden, wobei das Drosselventil weiter ein Metallteil (7) in Form eines Rahmens umfasst, wobei das Teil (7) einen Hals (8) des Ventils bildet, umfassend einen unteren Schenkel (8a), der mit einem Durchgang (9) für die Betätigungsachse (5) versehen ist, einen oberen Schenkel (8b), der einen Befestigungsflansch (10) für ein Betätigungsorgan bildet und mit einer Öffnung (11) versehen ist, aus der die Betätigungsachse (5) vorspringt, und zwei seitliche Schenkel (8c), die den unteren (8a) und oberen Schenkel (8b) verbinden, wobei das obere Ende des Ventilkörpers (1) eine Abflachung (6) umfasst, die sich senkrecht zu der Achse (4) erstreckt, wobei das Drosselventil **dadurch gekennzeichnet ist, dass** das Metallteil die Form eines im Wesentlichen quaderförmigen Rahmens aufweist und dadurch, dass der untere Schenkel (8a) des Teils (7) in Form eines Rahmens fest auf der Abflachung angebracht ist.

2. Drosselventil nach Anspruch 1, **dadurch gekennzeichnet, dass** der untere Schenkel (8a) des Halses (8) eine geringere Breite als die Breite des oberen Schenkels (8b) aufweist, wobei die seitlichen Schenkel (8c) eine Trapezform aufweisen.

3. Drosselventil nach einem der Ansprüche 1 oder 2, **dadurch gekennzeichnet, dass** der obere Schenkel (8b) Löcher (12) umfasst, die im Umkreis der Öffnung (11) positioniert sind, um Befestigungsmittel des Betätigungsorgans des Ventils aufzunehmen.

4. Drosselventil nach einem der Ansprüche 1 bis 3, **dadurch gekennzeichnet, dass** der Hals (8) aus einem Stück erhalten wird und eine allgemeine U-Form aufweist, deren freie Enden zum Mittelteil hin umgebogen sind, um den unteren Schenkel (8a) des Halses (8) zu bilden.

5. Drosselventil nach einem der Ansprüche 1 bis 4, **dadurch gekennzeichnet, dass** es einen ringförmigen Verschlusssitz (13) umfasst, der in die innere Umfangswand des Ventilkörpers (1) auf jeder Seite der Verschlussplatte (3) eingesteckt ist.

6. Drosselventil nach Anspruch 5, **dadurch gekennzeichnet, dass** jeder Verschlusssitz (13) seine Ränder nach außen gekrümmt und eingesteckt in jedes entsprechende offene Ende des Ventilkörpers (1) aufweist.

7. Drosselventil nach einem der Ansprüche 5 oder 6, **dadurch gekennzeichnet, dass** die Achse (4) zwei Teile umfasst, wobei ein so genannter oberer Teil die Betätigungsachse (5) bildet und den Hals (8) sowie den oberen Teil des Ventilkörpers (1) durchsetzt, wobei die Achse (4) fest mit dem oberen Ende der Verschlussplatte (3) verbunden ist, die sich in dem Ventilkörper (1) erstreckt, und wobei sich ein so genannter unterer Teil (15) ausgehend von dem unteren Teil des Ventilkörpers (1) erstreckt und fest mit dem unteren Ende der Verschlussplatte (3) verbunden ist.

8. Drosselventil nach Anspruch 7, **dadurch gekennzeichnet, dass** der untere Teil des Ventilkörpers (1) ein Lager (19) umfasst, durch welches der untere Teil der Achse (15) verläuft, und eine Stopfbuchse (17), die von einer Brille (18) zusammengedrückt wird.

9. Drosselventil nach einem der Ansprüche 1 bis 4, **dadurch gekennzeichnet, dass** der Ventilkörper (1) einen zylindrischen Kanal umfasst, der eine metallische Ringdichtung (20) aufnimmt, die einen Sitz für die Verschlussplatte (3) bildet, wobei die metallische Ringdichtung (20), gemäß der internen Drehachse des Ventilkörpers (1), zwischen einer Wand des Ventilkörpers (1) und einem Sitzklemmring (21) eingefügt ist, der von einem ringförmigen Haltereif gehalten wird, der in einer inneren radialen Nut des Kanals untergebracht ist.

10. Drosselventil nach Anspruch 9, **dadurch gekennzeichnet, dass** die Verschlussplatte (3) eine Scheibenform aufweist, die außermittig fest mit der Achse (4) verbunden ist, wobei die Schwenkachse (4) der Verschlussplatte (3) nicht mit der Ebene der Verschlussplatte (3) zusammenfällt.

## Claims

1. A throttle valve, intended to be used in a piping for transporting a fluid under high pressure called HP or under extreme pressure called EP, comprising at least one valve body (1) having a cylindrical shape provided with a cylindrical central recess (2) in which a substantially circular shutter plate (3) extends, said shutter plate (3) being pivotally mounted around an axis (4) extending vertically and parallel to a diameter of the valve body (1), said axis (4) protruding from the upper end of said valve body (1) to form a so-called actuating axis (5), said throttle valve further comprising a metallic part (7) having the form of a frame, said part (7) forming a neck (8) of the valve, comprising a lower branch (8a) provided with a passage (9) for the actuating axis (5), an upper branch (8b) forming a fastening flange (10) for an actuating member and provided with an aperture (11) from which said actuating axis (5) protrudes, and two lateral branches (8c) connecting the lower (8a) and upper (8b) branches,
the upper end of the valve body (1) comprising a flat surface (6) extending perpendicular to the axis (4),
said throttle valve being **characterized in that** said metallic part is in the shape of a substantially parallelepipedic frame and **in that** the lower branch (8a) of said part (7) having the form of a frame is secured to said flat surface.

2. The throttle valve according to claim 1, **characterized in that** the lower branch (8a) of the neck (8) has a width smaller than the width of the upper branch (8b), the lateral branches (8c) having a trapezoidal shape.

3. The throttle valve according to any one of claims 1 or 2, **characterized in that** the upper branch (8b) comprises holes (12) positioned at the periphery of the aperture (11) to receive means for fastening the actuating member of the valve.

4. The throttle valve according to any one of claims 1 to 3, **characterized in that** the neck (8) is obtained in one piece and has a U-like general shape whose free ends are folded towards the central portion to form the lower branch (8a) of the neck (8).

5. The throttle valve according to any one of claims 1 to 4, **characterized in that** it comprises an annular shutter seat (13) fitted into the internal circumferential wall of the valve body (1), on either side of said shutter plate (3).

6. The throttle valve according to claim 5, **characterized in that** each shutter seat (13) has its edges curved outwards and fitted into each corresponding open end of the valve body (1).

7. The throttle valve according to any one of claims 5 or 6, **characterized in that** the axis (4) comprises two portions, a so-called upper portion forming the actuating axis (5) and passing through the neck (8) as well as the upper portion of the valve body (1), said axis (4) being secured to the upper end of the shutter plate (3) extending in the valve body (1), and a so-called lower portion (15) extending from the lower portion of the valve body (1) and being secured to the lower end of said shutter plate (3).

8. The throttle valve according to claim 7, **characterized in that** the lower portion of the valve body (1) comprises a bearing (19) through which the lower portion of the axis (15) passes and a stuffing box (17) tightened by a gland (18).

9. The throttle valve according to any one of claims 1 to 4, **characterized in that** the valve body (1) comprises a cylindrical conduit receiving a metallic annular seal (20) which forms a seat for the shutter plate (3), said metallic annular seal (20) being interposed, along the internal axis of revolution of the valve body (1), between a wall of the valve body (1) and a seat clamp ring (21) held by an annular retainer housed in an internal radial groove of the duct.

10. The throttle valve according to claim 9, **characterized in that** the shutter plate (3) is in the form of a disk secured eccentrically to the axis (4), the pivot axis (4) of the shutter plate (3) not being coincident with the plane of said shutter plate (3).
